# EUROPÄISCHE PATENTSCHRIFT

(11) **EP 1 280 647 B1**
(45) Veröffentlichungstag und Bekanntmachung des Hinweises auf die Patenterteilung: **06.09.2006**
(21) Anmeldenummer: 01919052.9
(22) Anmeldetag: 19.04.2001
(51) Int. Cl.: B29C 45/50

(54) **SPRITZGIESSMASCHINE MIT EXZENTERANTRIEB**
INJECTION MOULDING MACHINE WITH ECCENTRIC DRIVE
MACHINE DE MOULAGE PAR INJECTION A ENTRAINEMENT EXCENTRIQUE

(30) Priorität: 08.05.2000 CH 897002000
(43) Veröffentlichungstag der Anmeldung: 05.02.2003
(73) Patentinhaber: ProControl AG, 9230 Flawil (CH)
(72) Erfinder: STILLHARD, Bruno, CH-9011 St. Gallen (CH); SIEGRIST, Ronald, CH-9242 Oberuzwil (CH)
(74) Vertreter: Gachnang, Hans Rudolf
(86) Internationale Anmeldenummer: PCT/CH2001/000250
(87) Internationale Veröffentlichungsnummer: WO 2001/085429

(56) Entgegenhaltungen:
- EP-A- 0 230 488
- EP-A- 0 451 294
- WO-A-01/26880
- DE-C- 4 327 710
- DE-C1- 469 994
- PATENT ABSTRACTS OF JAPAN vol. 16, no. 242 (M-1259), 3. Juni 1992 (1992-06-03) -& JP 04 053719 A (FANUC LTD), 21. Februar 1992 (1992-02-21)
- PATENT ABSTRACTS OF JAPAN vol. 15, no. 443 (M-1178), 12. November 1991 (1991-11-12) -& JP 03 189122 A (FANUC LTD), 19. August 1991 (1991-08-19)

## Beschreibung

Die Erfindung betrifft eine Spritzgiessmaschine gemäss den Merkmalen des Patentanspruchs 1.

### Stand der Technik

Press- und Spritzgiessmaschinen weisen von den Hauptfunktionen her betrachtet verschiedene Funktionsgruppen auf: Im Zentrum ist die Press- bzw. Spritzform. Diese besteht im Prinzip aus zwei Formhälften. Auf der einen Seite der Press- bzw. Spritzform ist der Antrieb für das automatische. Öffnen und Schliessen der Formhälften angeordnet. Gegenüber befindet sich das sogenannte Einspritzaggregat oder Pressaggregat, in der Folge für beide Fälle Einspritzaggregat genannt. Unter Einspritzaggregat wird hier die Gesamtheit von Press- bzw. Einspritzzylinder mit Heizmantel, Press- bzw. Spritzachse sowie die dazu erforderlichen Antriebe mit den baulichen Verbindungsmitteln verstanden.

Vereinfachend bzw, verkürzt können die einzelnen Phasen am Beispiel des Spritzgiessens etwa wie folgt umschrieben werden: Ober einen Einfülltrichter wird Kunststoff dem Einspritzzylinder zugeführt. Das Rohmaterial wird von den Schneckengängen der Einspritzschnecke erfasst und im Einspritzzylinder vorwärts bewegt. Durch die Drehbewegung der Einspritzschnecke wird der Kunststoff immer weiter zur Spitze befördert. Er wird primär durch die Geometrie der Schnecke bzw. durch Scherwärme aufgeschmolzen und kommt als Schmelze in einem Sammelraum unmittelbar vor der Düse an. Als Näherungswert gilt, dass die Schmelzwärme zu einem grossen Teil in mechanischer Arbeit zwischen Einspritzschnecke und Zylinderwandung und der Rest durch die Mantelheizung aufgebracht wird. Die Schmelze staut sich bei fortgesetzter Drehbewegung der Schnecke im Sammelraum und schiebt die Einspritzschnecke durch Volumenvergrösserung im Sammelraum in ihrer Achsrichtung rückwärts. Ist die für einen Schuss benötigte Menge an flüssigem Kunststoff im Sammelraum bereit, wird der Schneckendrehantrieb gestoppt. Die an der Spitze der Schnecke angebrachte Rückstromsperre wird durch die Vorwärtsbewegung geschlossen. Dadurch wird die Schnecke zu einem Kolben und übernimmt die Funktion eines Einspritzkolbens. Zum Einspritzen der Kunststoffmasse in die Form tritt eine Hydraulik in Aktion, welche in der Folge auch Kolbenantrieb genannt wird. Der Kolbenantrieb stösst die ganze Schnecke als reine axiale Bewegung nach vorn. Die Einspritzschnecke, nunmehr als reiner Kolben wirkend, spritzt die Schmelze durch die Düse mit Drücken von bis zu 2000 bar in die Kavitäten der Form. Das Einspritzen erfolgt in zwei Phasen: Die erste Phase ist das eigentliche Füllen. Der erforderliche Druck kann gegen das Ende der Füllphase auf die genannten 2000 bar ansteigen. Nach dem Füllen schliesst die Phase des Nachdruckes an, wobei der Enddruck der Füllphase etwa gehalten wird.

In der Praxis haben sich für Spritzgiessmaschinen je nach Anwendungsgebiet zwei Verfahren etabliert. In der Verpackungsindustrie gilt als oberste Maxime eine grösstmögliche Stückzahl pro Zeiteinheit, um dadurch billigste Teile wie Joghurtbecher, Süsswarenverpackungen, usw. herzustellen. Es werden besondere Verschlüsse verwendet, damit die Düse mitsamt dem Einspritzaggregat nach jedem Schuss sofort von der Form wegfahren und das Ausfliessen von Schmelze ins Freie trotzdem verhindert werden kann. Für die Sicherstellung der sehr hohen Qualitätsanforderungen bei technischen Anwendungen, etwa für die Herstellung von Zahnrädern mit höchster Präzision, wird die Düse an der Form belassen, so dass der erstarrende Kunststoff im Angusskanal ohne irgend eine Störung wie ein Düsenverschluss wirkt. Das Einspritzaggregat muss hier zwischen zwei Zyklen nicht verschoben werden. Theoretisch könnte der Sammelraum sehr lang ausgebildet werden. Die Länge der Schnecke bzw. die Länge der Schneckengänge ist entscheidend für die Aufbereitung der Schmelze. Die wirksame Länge wird aber um so kleiner, je länger der Sammelraum vor der Schneckenspitze ist. Als Grundregel gilt, dass der Sammelraum so gross ausgebildet wird, dass das grösste zu spritzende Teil mit einem einzigen Hub herstellbar ist und der beschriebene Spritzzyklus genutzt werden kann. Als Erfahrungswert gilt, dass der Verschiebeweg der Schnecke höchstens das Dreifache des Schneckendurchmessers betragen soll, damit die Schmelzqualität über den ganzen Dosiervorgang gewährleistet ist. Bei einer gegebenen Schneckengeometrie ist dadurch das grösste noch spritzbare Teil begrenzt. Bei allen kleineren Teilen wird entsprechend der Schneckenhub verkleinert. Es ergeben sich zwei obligatorische Bewegungsfunktionen:
- rotativer Schneckenantrieb und die
- axiale Bewegung der Plastifizierschnecke.

Z.B. für den Einsatz für Verpackungsteile wird eine Zusatzbewegung für die Bewegung der Düse zu der Form und weg von der Form benützt. Diese dritte Bewegungsfunktion wird durch eine Verschiebung des ganzen Einspritzaggregates realisiert. Für die Definition werden der Förderrichtungssinn der Schnecke und entsprechend die Düse als vorne, die Gegenseite, konkret die Lagerseite, als hinten bezeichnet.

Dieses Konzept hat sich über Jahrzehnte in vielen Variationen etabliert. Als Antriebsmittel war naheliegend, den Kolbenantrieb hydraulisch, den rotativen Antrieb elektromotorisch und den Aggregatantrieb hydraulisch oder pneumatisch auszuführen. Dabei werden die spezifischen Vorteile der verschiedenen Abtriebsformen genutzt. Mit hydraulischen oder pneumatischen Zylindern wird eine Linearbewegung ohne Umformung und damit die grösstmögliche lineare Verschiebekraft erzeugt. Bei elektromotorischen Antrieben wird direkt eine rotative Kraft erzeugt. Diese steht als solche, mit entsprechender Getriebeuntersetzung auf den Durchmesser der Plastifizierschnecke angepasst, direkt zur Verfügung.

Die EP 451 294 zeigt einen elektromotorischen Kurbelantrieb. Dabei wird für die Einspritzbewegung der Schnecke ein reiner Kurbeltrieb mit einer Kurbel zwischen einer ortsfesten Platte sowie einer zu dieser hin- und von dieser fortbewegbaren Platte vorgeschlagen. Die zentral wirkende Kurbel ist vorgesehen zum Umsetzen einer Vorwärts- und einer Rückwärtsdrehung der Antriebswelle in eine Hin- und Herbewegung der Einspritzförderschnecke. Der Antrieb bzw. Übertrieb für die Axialbewegung der Einspritzschnecke wird in Bezug auf den Einsatz eines Kurbeltriebes direkt als Stosskraft zwischen der ortsfesten Platte und der Förderschnecke ausgenutzt. Daraus ergeben sich jedoch einige Nachteile. Der Krafteingriff der Kurbel auf die Förderschnecke erfolgt in einem beachtlich grossen Winkel von in jedem Fall mehr als 30° zu der Achse der Einspritzschnecke. Zur Vermeidung entsprechender Seitenkräfte auf die untere Mantelfläche des Einspritzzylinders wird als Variante vorgeschlagen, die Einspritzschnecke über eine dazwischen angeordnete, längsgeführte zusätzliche Druckplatte zu bewegen. Es trifft zwar zu, dass die vorgeschlagene Lösung in Bezug auf die Herstellkosten des vorgeschlagenen Kurbelübertriebes betrachtet sehr günstig ist; der billigere Preis gemäss der Lehre der EP 451 294 muss jedoch mit der Notwendigkeit der Kompensation von Seitenkräften bzw. Reibkräften bezahlt werden. Gemäss der Lehre der EP 451 294 wird der Drehwinkeibereich der Antriebswelle bzw. der Arbeitsbereich der Kurbel beim Vorwärts- und Rückwärtsdrehen durch entsprechende Auslegung der Steuereinrichtung beschränkt. Der Arbeitsbereich gemäss EP 0 451 294 darf nicht im oberen oder unteren Totpunkt- oder Umgebungsbereich der Kurbel entsprechend liegen. Dieser beträgt 0 - ca. 30°.
Die JP-PS 03 189 122, die JP-PS 04 053 719 sowie die DE 469 994 haben insofern ein gemeinsames Konzept, als alle drei Lösungen eine Kurbel mit einem Pleuel für die lineare Bewegung des Presskolbens bzw. der Einspritzschnecke aufweisen. Die Kurbel führt jeweils eine Halbkreisbewegung durch. In jedem Falle liegt das Drehzentrum der Kurbel auf der gleichen Höhe wie die Achse des Presskolbens bzw. der Einspritzschnecke. Es ergeben sich dadurch neben der gewünschten Verschiebekraft für die Kolben bzw. die Schnecke auch starke Querkräfte, welche über entsprechende Lagerstellen abgefangen werden müssen.

Eine Aufgabe der Erfindung besteht darin, den Kurbel- oder Exzenterantrieb derart weiterzubilden, dass möglichst geringe Seitenkräfte auf die Lagerung der Einspritzschnecke wirken.

Gelöst wird diese Aufgabe durch eine Spritzgiessmaschine gemäss den Merkmalen des Patentanspruchs 1.

Die Erfindung erlaubt durch die vorgeschlagene Geometrie der Kraftübertragung von dem Pleuel in die Press- bzw. Spritzachse die Seitenkräfte auf ein Minimum zu reduzieren, ohne Einbusse der Vorteile eines Exzenter- oder Kurbelantriebes.

Die erfindungsgemässe Spritzgiessmaschine ermöglicht eine optimale Nutzung aller wesentlichen Vorteile eines Kurbeltriebes. Besonders bevorzugt ist der Exzenter und entsprechend die Kurbel bewegbar über einen Halbkreis von 180° mit Einschluss der beiden Totpunkte für das Anfahren der Extremlagen. In sehr vielen Anwendungen ist es vorteilhaft, wenn der Kurbeltrieb sich für jeden Press- bzw. Spritzzyklus, auch Arbeitszyklus genannt, unabhängig der Spritzteilgrösse, dem vorderen Totpunkt zumindest nähert. Es wird ferner vorgeschlagen, den Umschaltpunkt von Füllen auf Nachdruck im Bereich von 20 bis 40°, vorzugsweise im Bereich von etwa 30° des Drehwinkels des Exzenters vor der vorderen Totpunktlage des Kurbeltriebes festzulegen. Es hat sich gezeigt, dass im vorderen Bereich, in Totpunktnähe, der Motor nahezu kein Drehmoment bzw. nahezu keine Leistung mehr aufbringen muss. Der Nachdruckbereich, besonders für eine optimale Beherrschung eines Massepolsters, wird damit viel komfortabler, dies mit Einschluss von Mikrobewegungen, gegebenenfalls mit Unterstützung von optimalen Kennlinien. Gemäss einer weiteren vorteilhaften Ausgestaltung des Verfahrens kann die Axialbewegung vom vorderen Totpunkt der Kurbelbewegung her festgelegt werden. Der effektive Hubweg richtet sich nach der zu spritzenden Teilegrösse. Im vorderen Bereich werden in Bezug auf die Exzenterbewegung etwa 30 ° für die Nachdruckphase und im hinteren Bereich können bis zu 30° für eine Druckentlastung ausgenützt. Im hinteren Bereich ergibt die Zusatzbewegung im Falle des Spritzgiessens in dem Bereich des Schneckenrückzuges nach der Plastifizierung eine Druckentlastung für die Masse. Für den Füllvorgang verbleibt ein Winkelbereich der Exzenterbewegung von 100 bis 140° als maximale Wegstrecke für das grösste zu spritzende Teil, Dabei lassen sich alle Vorteile eines Kurbeltriebes maximal nutzen.
Der gängigen, nunmehr jahrzehntelangen Praxis lag als Modell des direkten mittigen Drückens oder Stossens von hinten auf die Giessachse für das Aufbringen der extrem hohen Spritzkräfte beim Einspritzen und Nachdrücken zu Grunde. Ein Hebelpaar gemäss der neuen Lösung nutzt diesen Vorteil, indem an der hinteren Lagerstelle beidseits der Einspritzschnecke symmetrisch angegriffen wird und die Hauptkräfte direkt in Richtung der Materialförderung, also nach vorne, gerichtet sind. Die neue Lösung hat eine ganze Anzahl Vorteile, nämlich:
- eine ideale Kraftübertragung beim Einsatz eines Exzenter- bzw. Kurbelantriebes über ein Hebelpaar,
- eine kompakte Baugruppe.
- eine optimale Kräfteführung.
- ferner ideale Voraussetzungen, um z.B. die sehr vorteilhaften Servoantriebe, sowohl für den Axial- wie den Radialantrieb im Falle der Einspritzschnecke, zu verwenden.

Der Kurbeltrieb ist für das Anfahren der Extremlagen zwischen den beiden Totpunkten bzw. der jeweiligen Totpunktnähe, bewegbar, wobei die Kurbel bzw. der Exzenter in Totpunktnähe mit einem entsprechend veränderten Modus gesteuert/geregelt und bei jedem Spritzzyklus nach Beendigung des Einspritzvorganges für den zeitweiligen Nachdruck in die vordere Totpunktnähe gefahren wird.

Als weitere Vorteile können kostengünstig alle prozessnahen Parameter optimal gesteuert/geregelt werden. Dies mit dem entscheidenden Vorteil, dass dank einer beinahe totalen Vermeidung von Störkräften durch eine minimale Winkelabweichung zwischen der Wirkrichtung des Hebelwerkes und der Press- bzw. Spritzachse nur eine minimale Reibkraft entsteht. Im Stand der Technik, z.B. gemäss EP 451 294, wird das Vermeiden der Totpunktnähe durch relativ grosse Reibkräfte in den Lagerstellen "erkauft". Jede Regelung von Parametern mit Beteiligung von stark reibungsbehafteten Maschinenbauteilen ist viel aufwendiger, als bei Lösungen mit sehr geringer Reibung, wie dies bei der neuen Lösung der Fall ist, wenn auch nur angenähert die selbe Regelgenauigkeit erreicht werden soll. Mit zusätzlichen regeltechnischen Mitteln können spezifische Druckkennlinien. Geschwindigkeitskennlinien und/oder giessspezifische Kennlinien, z.B. aus dem Massepolster, kompensiert bzw. korrigiert werden.

Die Winkelabweichung, um welche die Wirkachse des Pleuels bzw. des Hebelwerkes um die Press- bzw. Spritzachse pendelt, ist sehr klein und beträgt vorzugsweise weniger als 20°, besonders vorzugsweise sogar weniger als 10°. Das Drehzentrum des Exzenterantriebes kann z.B. etwa um den halben Radius der Exzentrizität des Exzenterzapfens radial versetzt zur Press- bzw. Spritzachse angeordnet sein derart, dass der Exzenterzapfen bei einer 180° - Einspritz-Drehbewegung des Exzenterrades (im Fall einer horizontal angeordneten Drehachse)etwa zur Hälfte unterhalb und etwa zur Hälfte oberhalb der Press- bzw. Spritzachse liegt. Der Hubweg ist in Funktion zur Teilegrösse wählbar, derart, dass der Exzenterantrieb für jeden Spritzzyklus etwa in die vordere Totpunktlage bewegbar ist. Die Untersetzung des Einspritzgetriebes "i" liegt zwischen 20 und 150, vorzugsweise zwischen 50 und 100 und kann z.B. drei Stufen aufweisen. Ein Kraftmesssensor wird in einem druckbelasteten Lagerdeckel im. Bereich der Schneckenantriebsachse angeordnet. Das Getriebe zur Kontrolle der Beschleunigungskräfte kann ferner einen Beschleunigungsgeber am Getriebe oder Mittel zur Erfassung der Beschleunigung des Antriebsmotors aufweisen. Das Hebelpaar bildet mit der Lagerstelle der Einspritzschnecke ein Joch und liegt zusammen mit der Press- bzw. Spritzachse etwa auf gleicher Höhe.

Der elektromechanische Antrieb weist einen steuer- bzw. regelbaren Antrieb auf, insbesondere einen Servomotor, wobei die maximale Auslenkbewegung des Exzenter- bzw. Kurbelübertriebes dem maximalen Hub der Einspritzschnecke entspricht und nach Bedarf nutzbar ist. Der Antrieb mit Getriebe kann fest im Unterteil des Aggregates angeordnet werden und wird bei der Aggregatverschiebung für die Zu- und -wegfahrbewegung mitbewegt. Der Exzenter- bzw. Kurbelantrieb weist bevorzugt eine durchgehende Antriebswelle auf, wobei das Hebelwerk symmetrisch auf beiden Seiten der Einspritzschnecke angeordnet ist. Das ganze Aggregat ist als Kompaktbaugruppe ausgebildet und weist eine Basisplatte auf. Es ist als komplette Baueinheit integral mit einem elektromechanischen Exzenter- bzw. Kurbelantrieb schlittenartig hin- und herverschiebbar. Die Einspritzschnecke bzw. der Presskolben kann über ihre hintere Lagerstelle mit einem Hebelpaar, relativ und parallel zur Basisplatte, in der Art eines Schlittens für die Axialbewegung der Einspritzschnecke bewegt werden. Mit Vorort-Steuer-Regelmittel werden alle Bewegungsfunktionen koordiniert und kontrolliert, so auch der Druckverlauf der Kunststoffmasse für den ganzen Arbeitsbereich.

Gemäss einer weiteren Ausgestaltung wird das Einspritzaggregat mit verfahrbarem Untersatz als komplette Baueinheit integral mit dem elektromechanischen Antrieb schlittenartig hin- und herbewegbar ausgestaltet. Für den Aufbau des Press- bzw. Spritzdruckes wird die hintere Lagerstelle mit dem Hebelpaar auf der Basisplatte in der Art eines Schlittens gestossen und gezogen. Dieses Gestaltungskonzept erlaubt, die ganze Antriebseinheit für das Hebelpaar unter der Basisplatte einzubauen und fest mit dieser zu verbinden. Bei der Aggregatverschiebung für die Düsenzu- und - wegfahrbewegung wird das ganze Einspritzaggregat bewegt. Für die motorischen Antriebsmittel ist eine durchgehende, für beide Hebel des Hebelpaares gemeinsame Kurbelantriebswelle vorgesehen. Dies erlaubt einen symmetrischen Antrieb und Übertrieb für beide Seiten der Einspritzschnecke. Daraus ergibt sich ein weiterer sehr wichtiger Aspekt, nämlich die Symmetrie der Kräfte einerseits, besonders aber die darauf aufbauende Symmetrie der wichtigsten raumbeanspruchenden Teile der ganzen Spritzgiessmaschine. In Weiterführung des aufgezeigten neuen Lösungsweges kann das Einspritzaggregat als Kompaktbaugruppe hergestellt werden. Die neue Lösung kann bei den verschiedenartigsten Spritzgiessmaschinen eingesetzt werden. Das neue Konzept ist ferner ideal für eine sehr wirtschaftliche Fabrikation, nämlich der Baugruppenherstellung. Die entsprechenden Vorteile kommen besonders dann zum Tragen, wenn die Baugruppe beinahe produktionsbereit alle wichtigen Komponenten enthält, welche für die Funktion des Einspritzaggregates notwendig sind. Auf diese Weise lassen sich Montagekosten sparen. Es ist möglich, einen Teil der Vorortelektronik bzw. Steuerung, z.B. die Leistungselektronik, direkt unter dem Einspritzaggregat, z.B. im Unterteil, anzuordnen.

Die Erfindung wird nun an Hand eines Ausführungsbeispiels erläutert. Es zeigen:
- die Figur 1: eine Seitenansicht eines Einspritzaggregates;
- die Figuren 2a - 2c: drei Stellungen des Exzenter- bzw. Kurbeltriebes; die Figur 2a die hinterste Stellung des Aggregates bei maximaler Einspritrmenge, die Figur 2b der Beginn des Nachdruckes und die Figur 2c die vorderste Position am Ende der Nachdruckphase;
- die Figuren 3a, 3b und 3c: verschiedene Ansichten des Einspritzaggregates einer Spritzgiessmaschine;
- die Figur 4a und 4b: die beiden Antriebe für die Axial- und die Rotationsbewegung der Einspritzschnecke für eine Spritzgiessmaschine;
- die Figuren 5a und 5b: das Getriebe in Ansicht sowie einen Schnitt für den rotativen Antrieb;
- die Figuren 6a bis 6c: drei Stellungen des Exzenters bei einer Presse.

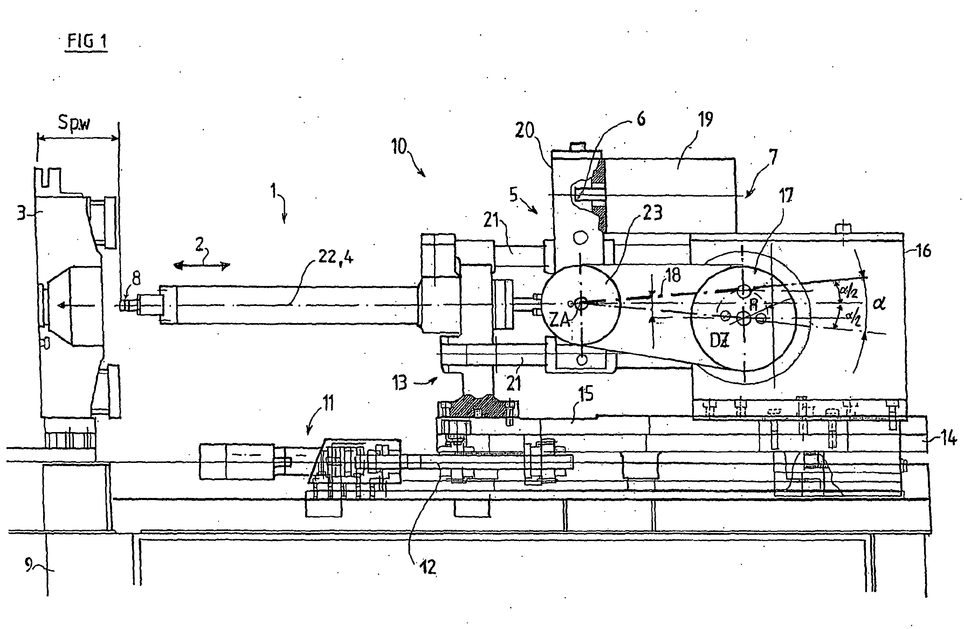

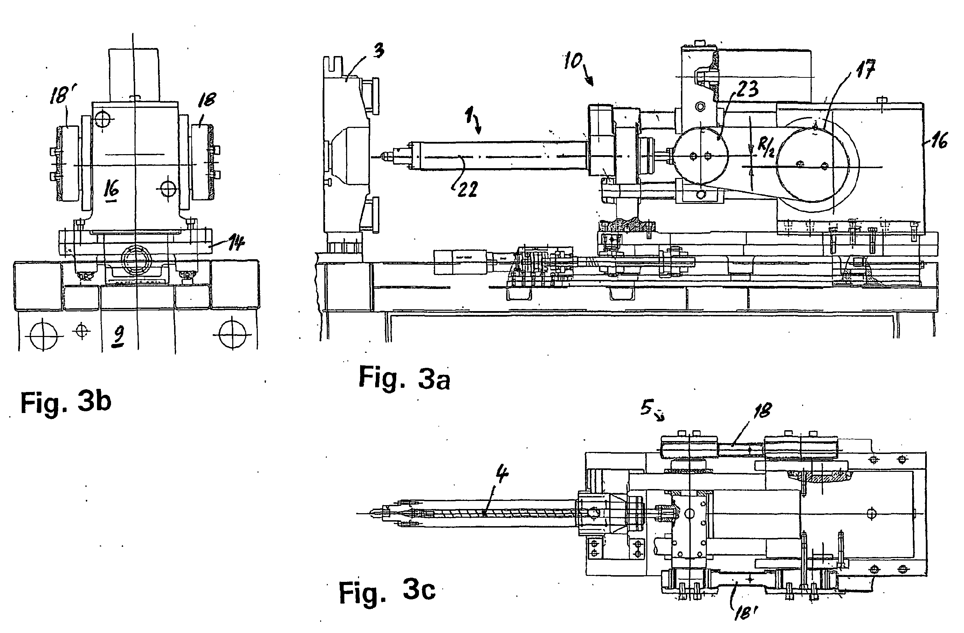

Die Figur 1 zeigt die Spritzseite einer Spritzgiessmaschine. Das Herzstück ist ein Einspritzzylinder 1, in den über einen Einfülltrichter Rohmaterial, meistens in Granulatform, gespiesen wird. In dem Einspritzzylinder 1 befindet sich eine Förderschnecke bzw. Einspritzschnecke 4 (Figur 3c), welche hinten auf der rechten Seite an einer Lagerstelle 5 gelagert ist. Die rotative Bewegung der Einspritzschnecke 4 wird über ein Zahnrad 6 und die Einspritzbewegung, Pfeil 2, als Kolbenbewegung über einen Kurbeltrieb erzeugt. Die Bewegung der Einspritzdüse 8 ist notwendig, um diese an die Form zu pressen, bevor der Spritzzyklus beginnen kann. Die Form selbst ist nicht dargestellt, jedoch eine Aufspannplatte 3, welche direkt auf ein Maschinenbett 9 abgestützt ist, gleicherweise wie das ganze Einspritzaggregat 10. Die Aggregatverschiebung erfolgt über einen Verschiebeantrieb 11 und eine Gewindespindel 12. Das Einspritzaggregat ruht über einer Grundplatte 15 schlittenartig auf Schienen 14, ist auf dem Maschinenbett 9 abgestützt und trägt starr verbunden eine Frontplatte 13. Ein Antriebsgehäuse 16 ist ebenfalls mit der Grundplatte 15 fest verschraubt und weist ein Exzenterrad 17 mit einem Radius R für den halben Exzenterweg eines Pleuels 18 auf. Der Pleuel 18 ist jochartig über die Lagerstelle 5 formschlüssig mit der Einspritzschnecke 4 verbunden für deren axiale Verschiebebewegung. Ein AC-Servomotor 19 treibt über ein Getriebe 20 die Einspritzschnecke 4 in rotativern Sinne an. Die axiale Verschiebung der Einspritzschnecke 4 erfolgt über den Kurbeltrieb, wobei das Getriebe 20 mitsamt der Einspritzschnecke 4 über mehrere Parallelführungen 21 gehalten sind. Das Antriebsgehäuse 16 bildet zusammen mit der Frontplatte 13, dem Antriebszylinder 1 sowie der Grundplatte 15 die verschiebbare Einheit, innerhalb derselben mit maximaler Kraftaufwendung die Einspritzschnecke 4 bewegbar ist.

Mit dem Winkel α ist die maximal mögliche Pendel- oder Auslenkung des Pleuels 18 bezeichnet. Weil das Drehzentrum Dz des Exzenterrades 17 etwa um den halben Radius R/2 tiefer gesetzt ist gegenüber der Einspritzschnackenachse 22, entsteht von dem Zentrum ZA des Übertriebsrades 23 für den Pleuel 18 eine Pendelbewegung von je α/2 in Bezug auf die Einspritzschneckenachse 22 α/2 beträgt bei dem Beispiel ca. 5 bis 10°, α somit etwa 10 - 20°.

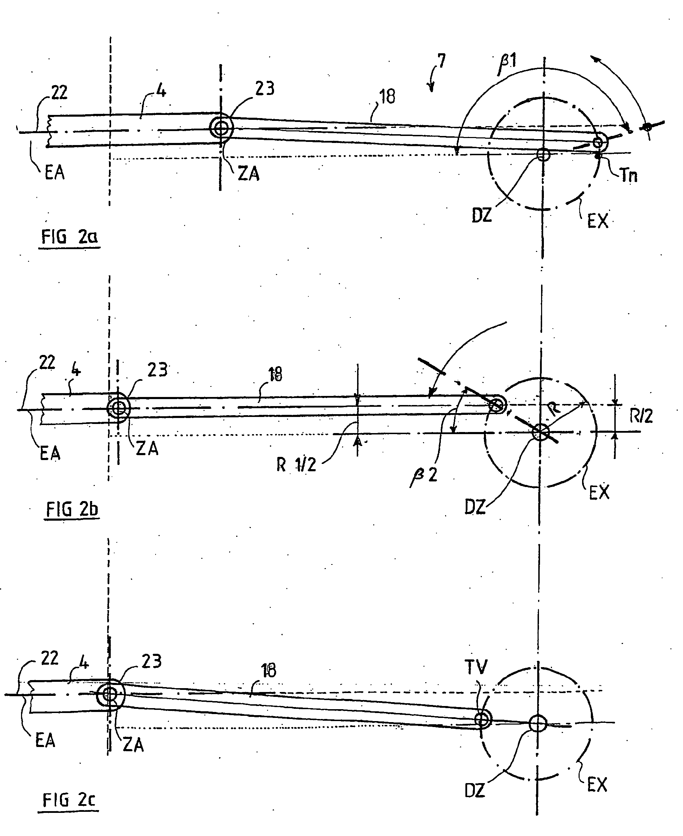

Die Figuren 2a, 2b und 2c zeigen drei verschiedene Positionen des Exzenter- bzw. Kurbeltriebes. Das theoretische Maximum der Exzenterbewegung für die Erzeugung des Verschiebeweges SpW. ist 180°. Die rückwärtige Lage der Exzenterstellung ist in Figur 2a dargestellt. Diese richtet sich nach der Grösse des zu spritzenden Teils. Bei dem grösstmöglichen Teil wird der volle 180°-Winkel ausgenützt. Th bedeutet Totpunkt hinten. Tv bedeutet Totpunkt vorne. β1 ist in der Figur 2a ein Maximum. Bei der Figur 2b ist der Pleuel 18 am Ende der Einspritzphase bzw. am Anfang der Phase des Nachdruckes. Der Winkel β beträgt hier ca. 30°. Die Stossrichtung des Pleuels 18 ist exakt in der Fortsetzung der Einspritzschneckenachse 22. Von der Figur 2b bis zu der Stellung Figur 2c wird die Nachdruckphase aufgebaut und in der vorderen Totpunktstellung gemäss Figur 2c gehalten.

Aus den Figuren 3a, 3b und 3c ist ersichtlich, dass das Hebelwerk aus einem Hebelpaar, nämlich Pleuel 18 sowie Pleuel 18', besteht, welches auf beiden Seiten der Einspritzschneckenachse symmetrisch angeordnet ist.

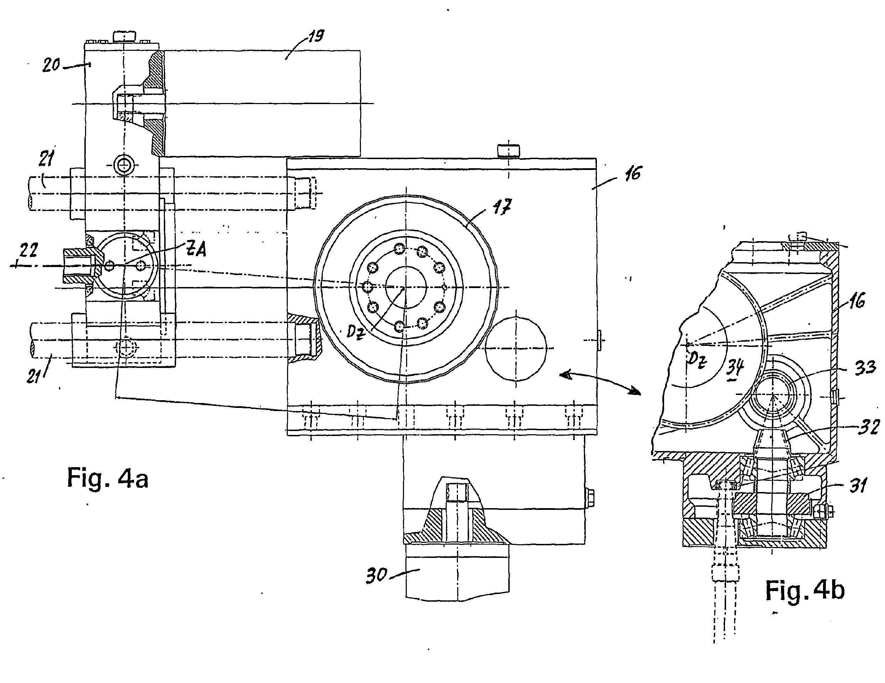

Die Figuren 4a und 4b zeigen die beiden Antriebsmotoren 19 für die rotative Bewegung sowie einen Antriebsmotor 30 für den Kurbeltrieb bzw. die Axialbewegung der Einspritzschnecke 4 mit den Übertriebsrädern 31, 32 und 33 auf das Zahnrad 34 für das Exzenterrad.

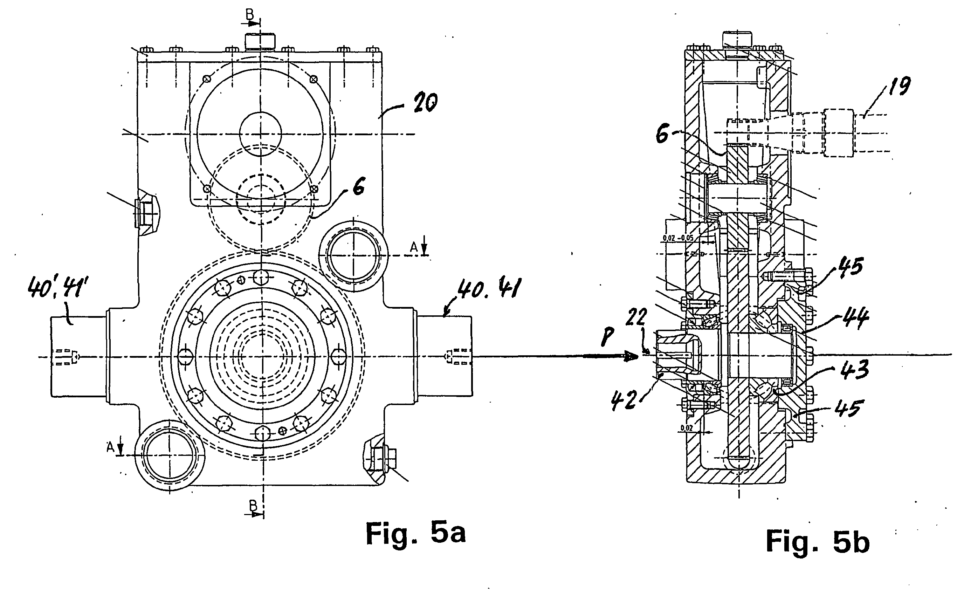

Die Figuren 5a sowie 5b zeigen eine Ansicht sowie einen Schnitt für den rotativen Antrieb. Die beiden Achsstummel 40, 40' dienen der Lagerung der zwei Übertriebsräder 23 und bilden die Verankerung des Getriebegehäuses 20 für die Axialbewegung bzw. die entsprechenden Lagerstellen 41, 41'. Am Anschlusszapfen 42 wird die Einspritzschnecke 4 starr verbunden. Von der Einspritzschnecke 4 wirkt eine Druckkraft P über Axiallager 43 auf einen Lagerdeckel 44. Im Lagerdeckel 44 sind in einer membranartigen, dünneren Stelle Kraftmesssensoren 45 angeordnet, über welche der Druck bzw. die Kraft für den Druckaufbau in dem Einspritzzylinder messbar und steuer-/regelbar ist.

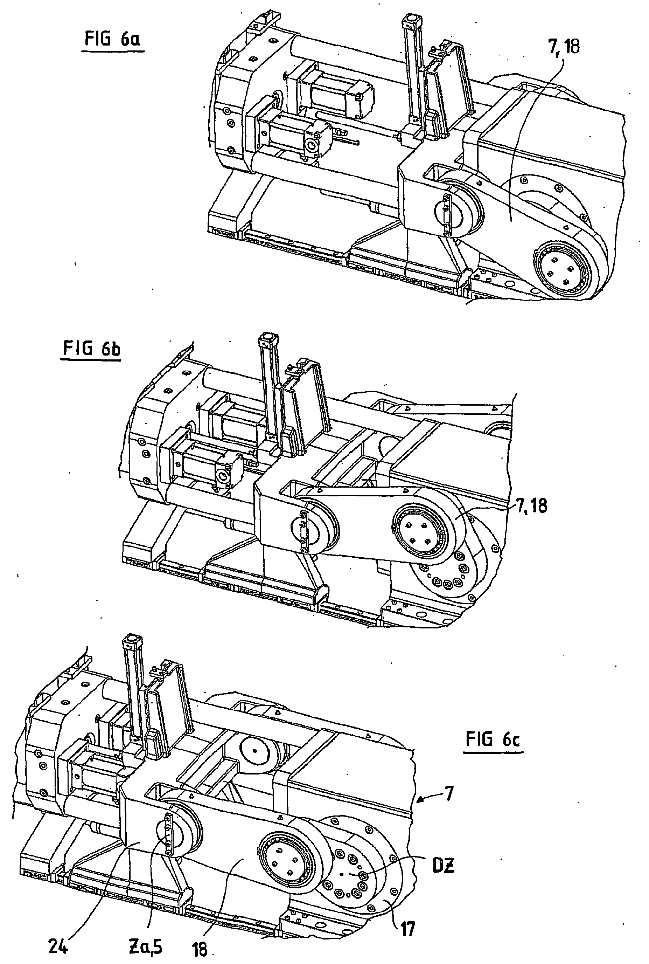

Die Figuren 6a bis 6c zeigen verschiedene Stellungen des Exzenteraritriebes für eine Presse, sinngemäss zu den vorgenannten Beispielen. Die Figur 6a zeigt die hinterst mögliche bzw. rückwärtige Lage des Pleuels 18, die Figur 6b eine mittlere Lage in die Figur 6c den Pleuel 18 in der vorderen Totpunktlage.

## Patentansprüche

1. Spritzgiessmaschine mit einem elektromechanisch betätigten Exzenterantrieb für die Axialbewegung der Einspritzschnecke (4) entlang der Einspritzschneckenachse (22), umfassend ein Exzenterrad (17) mit einem Exzenterzapfen (24), ein Pleuel (18), dessen hinteres Ende auf dem Exzenterzapfen (24) gelagert ist und dessen vorderes Ende an der hinteren Lagerstelle der Einspritzschnecke (4) angelenkt ist,
**dadurch gekennzeichnet,**
**dass** das Drehzentrum (DZ) des Exzenterrades (17) gegenüber der Einspritzschneckenachse (22) nach unten versetzt angeordnet ist.

2. Spritzgiessmaschine nach Anspruch 1, **dadurch gekennzeichnet, dass** der Versatz des Drehzentrums (DZ) des Exzenterrades (17) zur Einspritzschneckenachse (22) dem halben Radius der Exzentrizität des Exzenterzapfens (24) entspricht.

3. Spritzgiessmaschine nach einem der Ansprüche 1 oder 2, **dadurch gekennzeichnet, dass** ein weiterer Pleuel (18') vorgesehen ist, und dass die beiden Pleuel (18, 18') in Richtung der Drehachse des Exzenterrades (17) gegengleich versetzt zur Einspritzschneckenachse (22) angeordnet sind.

## Claims

1. An injection moulding machine with an electromechanically actuated eccentric drive for the axial movement of the injection worm (4) along the injection worm axis (22), comprising an eccentric wheel (17) with an eccentric journal (24), a connecting rod (18) whose rear end is mounted on the eccentric journal (24) and whose front end is articulately connected to the rear bearing location of the injection worm (4),
**characterised in that**
the rotational centre (DZ) of the eccentric wheel (17) is arranged offset downwards with respect to the injection worm axis (22).

2. An injection moulding machine according to claim 1, **characterised in that** the offset of the rotational centre (DZ) of the eccentric wheel (17) to the injection worm axis (22) corresponds to half the radius of the eccentricity of the eccentric journal (24).

3. An injection moulding machine according to one of the claims 1 or 2, **characterised in that** a further connecting rod (18') is provided, and that the two connecting rods (18, 18') in the direction of the rotational axis of the eccentric wheel (17) are arranged offset to the injection worm axis (22) in an equal and opposite manner.

## Revendications

1. Machine de moulage par injection comprenant un entraînement à excentrique, à actionnement électromécanique, pour le mouvement axial de la vis d'injection (4) le long de l'axe de vis d'injection (22), comportant une roue d'excentrique (17) présentant un tenon d'excentrique (24), une bielle (18) dont l'extrémité arrière est montée sur le tenon d'excentrique (24) et dont l'extrémité avant est montée en articulation sur le point d'appui arrière de la vis d'injection (4), **caractérisée en ce que** le centre de rotation (DZ) de la roue d'excentrique (17) est agencé avec un décalage vers le bas par rapport à l'axe de vis d'injection (22).

2. Machine de moulage par injection selon la revendication 1, **caractérisée en ce que** le déport du centre de rotation (DZ) de la roue d'excentrique (17) par rapport à l'axe de vis d'injection (22) correspond à la moitié du rayon de l'excentricité du tenon d'excentrique (24).

3. Machine de moulage par injection selon l'une ou l'autre des revendications 1 et 2, **caractérisée en ce qu'**une autre bielle (18') est prévue et **en ce que** les deux bielles (18, 18') sont agencées de manière diamétralement opposée et avec décalage par rapport à l'axe de vis d'injection (22), en direction de l'axe de rotation de la roue d'excentrique (17).
